(19) Europäisches Patentamt
European Patent Office
Office européen des brevets

(11) Publication number: **0 169 702**
**B1**

(12) # EUROPEAN PATENT SPECIFICATION

(45) Date of publication of patent specification: **07.03.90**

(51) Int. Cl.$^5$: **C 08 F 4/00**

(21) Application number: **85305080.5**

(22) Date of filing: **17.07.85**

(54) **Aldehyde of imine oxygen scavengers for vinyl polymerizations.**

(30) Priority: **19.07.84 US 632553**

(43) Date of publication of application:
**29.01.86 Bulletin 86/05**

(45) Publication of the grant of the patent:
**07.03.90 Bulletin 90/10**

(84) Designated Contracting States:
**AT BE CH DE FR GB IT LI LU NL SE**

(56) References cited:
**US-A-4 395 361**

(73) Proprietor: **ROHM AND HAAS COMPANY**
**Independence Mall West**
**Philadelphia Pennsylvania 19105 (US)**

(72) Inventor: **Novak, Ronald William**
**52 Skyline Drive**
**Chalfont, Pa. 18914 (US)**
Inventor: **Emmons, William David**
**1411 Halcomb Road**
**Huntingdon Valley, Pal 18914 (US)**

(74) Representative: **Angell, David Whilton et al**
**ROHM AND HAAS (UK) LTD. European**
**Operations Patent Department Lennig House**
**2 Mason's Avenue**
**Croydon CR9 3NB (GB)**

**EP 0 169 702 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention is concerned with oxygen scavengers useful in the polymerization of vinyl unsaturated monomers, oligomers, and polymers in the presence of oxygen.

Eickoff et al, U.S. Patent 4,395,361, teach a class of oxygen-activated free radical polymerization catalysts comprising cobalt (II) compounds and certain autoxidizable cyclic hydrocarbons and benzaldehyde.

Eickoff et al also describe a method of catalyzing an oxygen-initiated free radical polymerization reaction using these catalysts. No other aldehydes than benzaldehyde are disclosed. Benzaldehyde is not suitable for practising the present invention being too volatile and too inefficient.

Gruber U.S. Patent 4,017,652, teaches oxygen inhibition of the photopolymerization of acrylic resins being reduced by employing a photocatalyst system containing an aromatic ketone and/or aromatic aldehyde photosensitizer of a certain type which promote polymerization through bimolecular photochemical reactions, and an aromatic ketone photoinitiator.

Petersen, U.S. Patent 3,551,423, teaches production of certain amides by reaction of amides with formaldehyde and an appropriate CH-acid aldehyde and the use of the new amide products as textile finishes and as valuable intermediates for the production of amino aldehydes and aminocarboxylic acids, pharmaceuticals and aminoplasts. Peterson does not disclose utility of the aldehydes as oxygen scavengers, nor does he disclose the corresponding imines.

Collins et al, *Reactions of UV curable Resin Formulations and Neat Multifunctional Acrylates II Photoinitiated Polymerization of Neat 1,6-hexanedioldiacrylate,* Journal of Coatings Technology, Vol. 51, No. 648, January 1979, teach benzoin isobutyl ether photoinitiated polymerization of 1,6-hexanedioldiacrylate, and eliminating the inhibition by dissolved oxygen by the addition of N,N-dimethylaminobenzaldehyde and eosin-Y.

Imoto et al, *Vinyl Polymerization. 364. Polymerization of Methyl Methacrylate Initiated with Benzaldehyde,* J. Poly. Science: Polymer Chemistry Edition, 17:385—92 (1979) show an anaerobic initiation of the radical polymerization of methyl methacrylate with benzaldehyde. Oxygen scavenger activity is not needed in anaerobic reactions, and so Imoto et al is not pertinent to oxygen scavenging.

In recent years, certain vinyl monomer, oligomer, and polymer systems have been developed which have sufficiently high molecular weight and sufficiently low odor, volatility, and toxicity so as to be useful as non-volatile reactive components of high or even 100% solids resin formulations which can be cured rapidly by free radical polymerization in the absence of oxygen, i.e. anaerobically, for example in radiation cure applications or in engineering adhesives where polymerization occurs between two substrates to be bonded. However, when cure of these vinyl unsaturated systems is attempted in the presence of air, i.e. aerobically, serious inhibition of free radical polymerization by oxygen at the air interface occurs. It is this problem to which the present invention is addressed.

The present invention is concerned with the provision of oxygen scavengers for use in compositions comprising at least one vinyl unsaturated monomer, oligomer or polymer and the provision of compositions comprising at least one vinyl unsaturated monomer or an oligomer or polymer thereof which have attractive curing characteristics in the presence of oxygen.

We have now found that compositions comprising an aldehyde or imine of the formula

$$R_3Q_n$$

wherein n is 1—4; $R_3$ is an organic radical having a valence of 1—4 or hydrogen; Q is of the formula

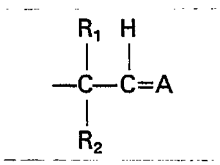

wherein A is O or $NR_4$; $R_1$, $R_2$, and $R_4$ are independently selected $C_{1-6}$ alkyl radicals, are useful oxygen scavengers in compositions containing at least one vinyl monomer, oligomer or polymer and the invention, in one aspect, is directed to this use.

For the avoidance of doubt, in this specification and claims "vinyl" is to be regarded as embracing all monoethylenic unsaturations, for example also vinylene and vinylidene.

In another aspect, the invention comprises aldehyde and/or imine as defined above and a transition metal ion selected from $Co^{++}$, $Cu^{++}$, and $Mn^{++}$. In another aspect the invention comprises the aldehyde or imine and a vinyl unsaturated monomer and/or polymer.

The invention is applicable to the various compositions which comprise at least one vinyl unsaturated monomer, oligomer, or polymer and which are designed for cure in the presence of oxygen and which are available in the field of paints and other coating compositions, gel coats, tank linings, polymer concrete, high solids baking finishes. A particular field in which oxygen inhibition occurs is in thin films which contain vinyl monomers where it is usually an object to obtain tack-free finishes rapidly. In some cases, the

desired finish is hard, whereas in other cases, such as with roof mastics, the desired finish is flexible. Particularly important systems in which the oxygen scavengers described below are useful include unsaturated polyester, acrylic/melamine, reactive coalescent, vinyl ester, UV cure, concrete sealant, polymer concrete, engineering adhesive.

As mentioned before, the oxygen scavengers of the invention are selected from the group consisting of compounds of the formula

$$R_3Q_n$$

wherein n is 1—4; $R_3$ is an organic radical having a valence of 1—4 or hydrogen; Q is of the formula

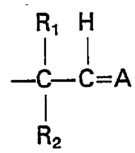

wherein A is O or $NR_4$; $R_1$, $R_2$, and $R_4$ are independently selected $C_{1-6}$ alkyl radicals.

$R_3$ is preferably of the formula

$$R_5YCH_2—$$

wherein $R_5$ is hydrogen or an organic radical of 1—4 valence and selected from $C_{1-36}$ alkyl, cycloalkyl, aryl, arylalkyl, alkylaryl, and acyl; Y is O or $NR_6$; and $R_6$ is hydrogen or a $C_{1-6}$ alkyl or aryl group.

Some of the suitable aldehydes are

(i) 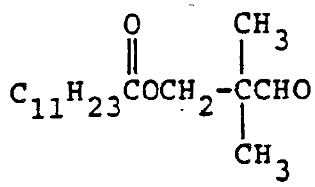 ;

(ii) 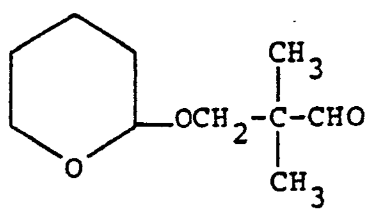 ;

(iii) 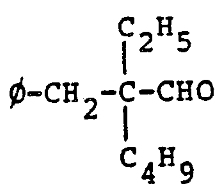 ;

(iv) 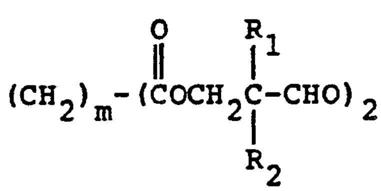 ;

wherein $R_1$ and $R_2$ are selected from methyl, ethyl, butyl, and mixtures thereof, and m is 4 or 7;

(v) 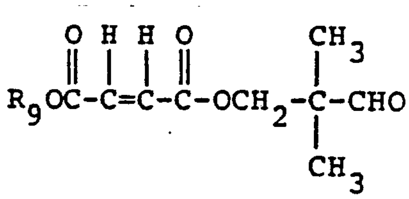

wherein $R_9$ is methyl, ethyl, or butyl;

(vi)

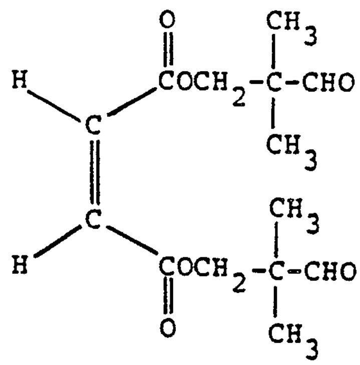

;

(vii)

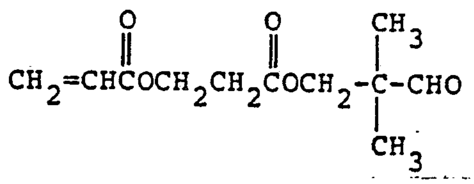

(viii)

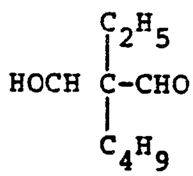

(ix)

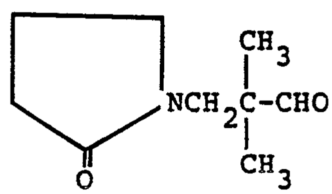

(x)

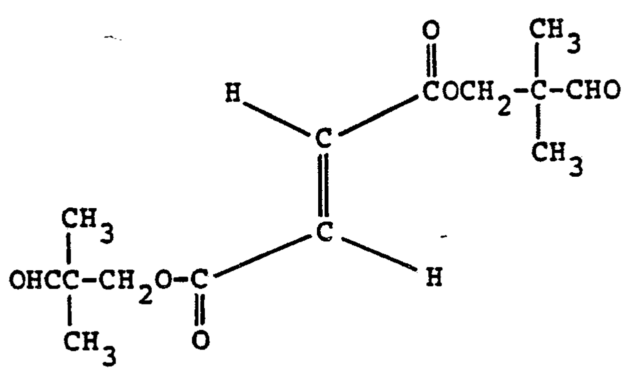

(xi)

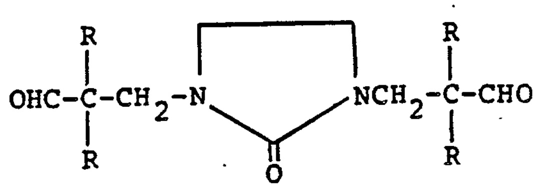

wherein R is methyl, a 1/1 mixture of ethyl and butyl, or a 0.82/0.09/0.09 mixture of methyl, ethyl, and butyl;

(xii)

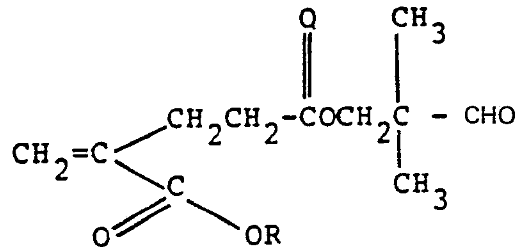

wherein R is methyl or ethyl;

(xiii)

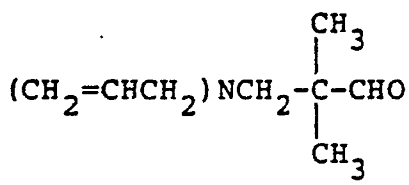 ;

(xiv)

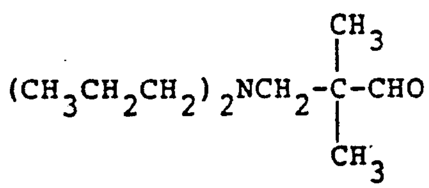 ; and

(xv)

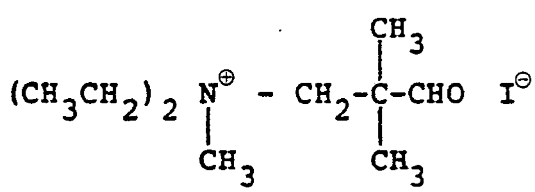 .

Some of the suitable imines are

(i)

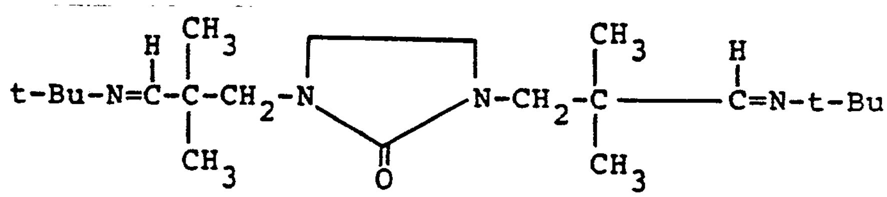

(ii)

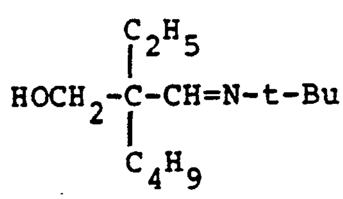

(iii)

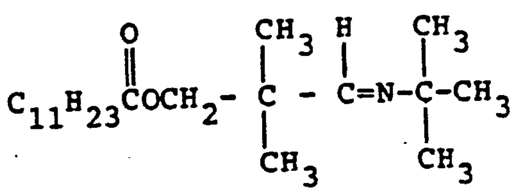 ; and

(iv) 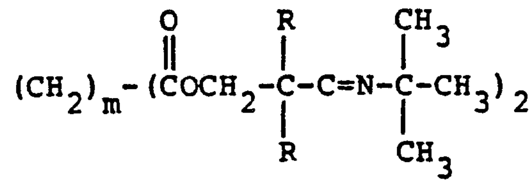

wherein m is 4 and R is methyl, ethyl, and butyl. $R_3$ can also be selected from:

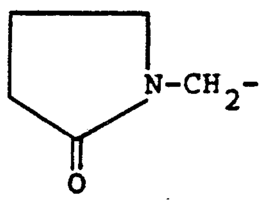 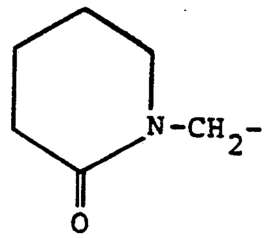 ; and

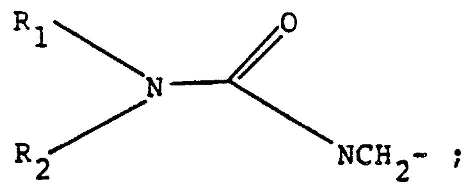 ;

or a radical of the formula

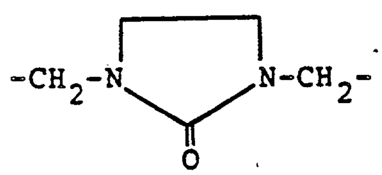 ; or 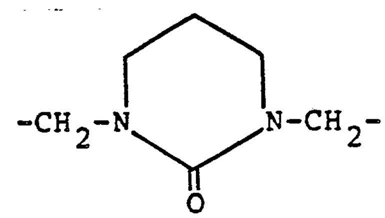 ;

or 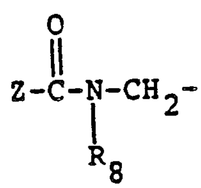

wherein $R_8$ is a $C_{1-6}$ alkyl or aryl, and Z is $NR_8R_8$.

or 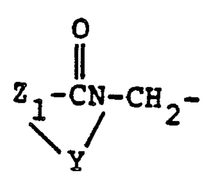

wherein $Z_1$ is $NCH_2$ and Y is $C_2$—$C_5$ alkyl.

In the imines, A can be of the formula

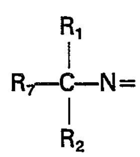

wherein $R_7$ is $C_{1-6}$ alkyl or aryl.

A problem with some of the aldehydes used in the invention, even the preferred ones, is poor pot stability of the aldehyde/vinyl unsaturated system mixtures, apparently due to premature oxidation of the

aldehyde. This problem can be solved by using the corresponding imine of the invention which is in a sense a chemically blocked form of the aldehyde. However, ambient moisture is needed to hydrolyse the imine to the active aldehyde.

An alternative to the imine approach is to use oxime or thiuram stabilizers to preserve the pot life of aldehyde/vinyl unsaturated system mixtures. One suitable thiuram is tetramethyl thiuram disulfide (TMTDS), which is most preferred. One suitable oxime is methyl ethyl ketone oxime.

The oxygen scavengers of the invention are most useful in vinyl unsaturated systems which would not readily polymerize under aerobic conditions, and in such widely diverse applications as aqueous or solvent based coatings, impregnants, plastics, reinforced plastics, tank linings, gel coatings, and polymer concrete. The vinyl unsaturated systems are, for example, monomers, oligomers, and/or polymers which undergo free radical polymerization and are polymerized from such monomers as:

- i.) Mono, di- and trifunctional acrylates and methacrylates
- ii.) fumarates
- iii.) maleates
- iv.) vinyl esters
- v.) styrenes
- vi.) acrylamides
- vii.) acrylonitrile
- viii.) itaconate esters
- ix.) alpha-methylene glutarate esters
- x.) acryloxyproprionic acid and esters
- xi.) methacrylic acid or acrylic acid.

Such polymers as:

- i.) maleate containing polyesters
- ii.) fumarate containing polyesters
- iii.) itaconate containing polyesters
- iv.) alpha-methylene glutarate containing polyesters
- v.) vinyl resins
- vi.) urethane multi ((meth)acrylates)
- vii.) polyester multi ((meth)acrylates)

can comprise the vinyl unsaturated system.

The vinyl unsaturated system can also include additive(s) such as pigments, colorants, sand, glass fibers, surfactants, dispersants, and defoamers.

The convenient ratio of aldehyde or imine to vinyl unsaturated system is 1 to 20 parts by weight aldehyde or imine and 99 to 80 parts by weight vinyl unsaturated system.

Mixtures of aldehydes and imines can be used.

It will be noted that in the aldehyde or imine formula $R_1$ cannot be connected to $R_2$ so that benzaldehyde is excluded from the scope of the formula.

A preferred mixture of aldehydes is the reaction product of (a) ethylene urea, (b) formaldehyde, (c) isobutylaldehyde, and (d) 2-ethyl hexanal in a molar ratio of (a):(b) of 1:2 and of (a) to the sum of (c) and (d) of 1:2. A particularly preferred group of imines is the reaction product of the just-mentioned aldehyde mixture with t-butyl amine.

The following examples are presented to illustrate a few embodiments of the invention. In these examples all parts and percentages are by weight unless otherwise indicated.

The following abbreviations are utilized in the examples which follow.

| | | |
|---|---|---|
| IDMA | = | isodecyl methacrylate |
| IBOMA | = | isobornyl methacrylate |
| IBOA | = | isobornyl acrylate |
| HPMA | = | hydroxypropyl methacrylate |
| TEGMA | = | tetraethylene glycol dimethacrylate |
| DCPOMA | = | dicyclopentenyloxyethyl methacrylate |
| $C_8$AM | = | N-nonyl acrylamide |
| TMPTA | = | trimethylol propane triacrylate |
| LMA | = | lauryl methacrylate |
| CEMA | = | cetyl iscosyl methacrylate |
| IDMA | = | isodecyl methacrylate. |

## EXAMPLES

### Example 1

Preparation of 2-Oxoimidazolidine — 1,3-bis (2,2-dimethylpropanal)

A 500 ml., three-necked flask equipped with a thermometer, condenser, and mechanical stirrer was charged, under a nitrogen blanket, with 86.1 g. of 2-imidazolidone (ethyleneurea, 1.0 mole), 151 g. of isobutyraldehyde (2.1 moles), and 162 g. of 37% aqueous formaldehyde solution (2.0 moles). A mild exotherm resulted (22—45°C). On addition of 21.5 g of 50% aqueous sulfuric acid solution (w/w), the temperature of the reaction mixture rose to 58°C with the onset of reflux. To maintain reflux, the

temperature of the reaction mixture was gradually increased, reaching 95°C after 2.75 hours. The product was cooled and neutralized with 50% aqueous sodium hydroxide solution. After standing for several hours, two layers formed.

The organic layer was decanted from the aqueous (bottom) layer, then mixed with methylene chloride (500 l) and extracted with two, 100 ml. portions of water. Methylene chloride and traces of water were stripped from the product using a rotary evaporator, affording 254 g. of product/(100% yield) as a yellow oil which crystallized slowly on cooling. Further purification of the product by recrystallization from methylene chloride and ethyl ether gave 175 g. of colorless crystals, mp 83—84°C. NMR ($CDCL_3$): 9.63 (s, 2H, —CHO), 3.35 (s, 4H, —$CH_2$—), 3.30 (s, 4H, —CH—$_2$—), and 1.10 (s, 12H, —$CH_3$). The product is slightly soluble in water (5 wt. %) and readily soluble in common polar organic solvents.

Example 2

Preparation of 2-Oxiomidazoline-1,3-bis (dialkylpropanal)

A 1000 ml. four-necked flask equipped with a thermometer, condenser, mechanical stirrer, and nitrogen ebullator was charged with 215.3 g. ethyleneurea (2.5 moles), 150.0 g. paraformaldehyde (5.0 moles), and 100 g. water. Aqueous sulfuric acid (50%, 8.0 g., 0.04 mole) was then added slowly to the slurry, with stirring, over a period of 15 minutes. A moderate exotherm resulted (25°C 60°C). When the exotherm ceased, 72.1 g. isobutyraldehyde (1.0 mole) was added over 15 minutes while concurrently heating the reaction mixture to 80°C. After a 15 minute hold at temperature, at which point essentially all of the isobutyraldehyde had been consumed, the mixture was heated to 100°C and 192.3 g. 2-ethylhexanal (1.5 moles) was added over 15 minutes. The temperature was maintained between 95°C and 100°C for 2.5 hours. The reactor was cooled to 80°C and 185.0 g. isobutyraldehyde (2.56 moles) was then added over 30 minutes. A 1.5 hour hold at reflux completed the condensation. The mixture was cooled to 70°C and treated with 5.0 g. of sodium hydroxide pellets (0.125 mole) to effect catalyst neutralization. After 15 minutes of agitation, the stirrer was stopped to allow phase separation (rapid) and removal of the aqueous (bottom) layer. Unreacted isobutyraldehyde and water were then distilled in vacuo (80°C, 20 mm). Filtration of the residue through a Celite pad afforded 684 g. of product (95% yield) as a light yellow oil with a Brookfield viscosity of 6,000 cps at 25°C.

Example 3

Preparation of 2,2-Dimethyl-3-oxopropyl Laurate

To a hot (80°C) solution of lauric acid (70 g., 0.35 mole), and hydroxypivaldehyde (30.6 g., 0.3 mole) in 120 g. of toluene was added 1.75 g. of p-toluenesulfonic acid monohydrate (0.009 mole). The mixture was then heated at total reflux for 1.5 hrs. and water generated in the reaction was removed by azeotropic distillation. The reaction mixture was cooled, washed with saturated aqueous sodium bicarbonate and brine, then dried over magnesium sulfate, filtered, and evaporated *in vacuo*. GLC analysis of the product showed that it contained 90% of the desired laurate ester. Fractional distillation of the crude sample gave a product cut, b.p. 180°C/4.0 mm, of 95% purity (GLC, area%). NMR ($CDCL_3$): 9.73 (s, 1H, —CHO), 4.2 (s, 2H, —$CO_2CH_2$—), 2.3 (t, 2H, —$CH_2CO_2$—), 0.9—1.9 (m, 23H, $CH_3(CH_2)_{10}CH_2CO_2$—), and 1.17 (s, 6H, —$C(CH_3)_2$.

Example 4

Preparation of Bis(2,2-dimethyl-3-oxopropyl) Fumarate

Crude bis (2,2-dimethyl-3-oxopropyl) maleate was treated with a catalytic amount of morpholine (10 wt. %) in refluxing toluene for 4 hrs. The resulting solution was cooled to room temperature, washed with diluted hydrochloric acid and brine, then dried over magnesium sulfate. Evaporation of volatiles *in vacuo* gave crude bis (2,2-dimethyl-3-oxopropyl) fumarate in essentially quantitative yield. NMR* ($CDCL_3$): 9.7 (s, 1H, —CHO), 6.93 (s, 2H, trans —CH=CH—), 4.33 (s, 2H, —$CO_2CH_2$—), and 1.2 (s, 6H, —$C(CH_3)_2$—).

*Obtained with a distilled sample of bis (2,2-dimethyl-3-oxopropyl) fumarate, m.p. 55°C.

Example 5

Preparation of Bis(2,2-dimethyl-3-oxopropyl) Aselate

A 3 liter, four-necked flask equipped with a mechanical stirrer, nitrogen sparage, steam-jacketed additional funnel, Dean-Stark trap and condenser was charged with 380 g. of azelaic acid (2 moles), 500 g. of toluene and 13.3 g. of p-toluenesulfonic acid monohydrate (0.07 mole). The mixture was heated at reflux, yielding an homogeneous solution within 20 minutes. To the reaction mixture was then dropwise added a preheated solution of 450 g. of hydroxypivaldehyde (4.4 moles) in 500 g. of toluene. Water was removed azeotropically via the Dean-Stark trap. When the reaction was complete, the mixture was cooled to room temperature and washed with saturated aqueous sodium bicarbonate and brine, then dried over magnesium sulfate and evaporated *in vacuo* giving 720 g. of the crude dialdehyde azelate. GLC analysis (area%) indicated that the product contained 75% of bisaldehyde azelate. NMR ($CDCL_3$): 9.7 (s, 2H, —CHO), 4.26 (s, 4H, —$CO_2CH_2$—), 2.3 (t, 4H, —$CH_2CO_2$—), 0.9—1.8 (m, 10H, —$O_2CH_2$—$(CH_2)_5$—$CH_2CO_2$—), and 1.2 (s, 12H, —$C(CH_3)_2$—).

Example 6

Preparation of Bis (t-Butyl Imine) of Example 1

A 500 ml. three-necked flask equipped with a thermometer, mechanical stirrer, Dean-Stark trap, and condenser was charged, under a nitrogen blanket, with 50.8 g. 2-oxoimidazolidine-1,3-bis (2,2-dimethyl

propanal) (0.2 mole), 50 g. t-butylamine (0.65 mole) and 200 g. methylene chloride. The reaction mixture was heated to reflux (46°C) and water was removed azeotropically. After a total of 20 hours at reflux, the theoretical amount of water was isolated (7 ml.). The reaction was cooled and the crude product was stripped on a rotary evaporator. Upon cooling, the residue solidified to give the bisimine as a colorless waxy solid, mp 46—47°C.

Example 7

Use of Aldehydes/Imines as Oxygen Scavengers in Thin Film Polymerizations

A filter paper matrix was used to approximate thin film conditions. The sample to be tested is weighed onto an approximately equal weight of filter paper (Whatman No. 1). Weight changes are followed with time. At selected intervals the test sample is extracted with chloroform (or $CDCl_3$) and the weight% extractables determined. The extractables may be subjected to a variety of tests as warranted (i.e. nmr/ir spectrum, titration, elemental analysis). If the sample to be tested is a solid or a high viscosity liquid the material is diluted with chloroform prior to absorption onto the filter paper.

Monomers

Monomer Cures in a Filter Paper Matrix 0.1% $Co^{++}$; rt

| | | Cure[1] | |
|---|---|---|---|
| Monomer(s) | Ratio | Time | Sol. F[2] |
| TEGMA | 100 | >>3 days | — |
| TEGMA/EX. 1 | 98/2 | >>2 days | — |
| | 95/5 | >2 days | — |
| | 90/10 | 1 day | 0.29 |
| | 80/20 | 4—5 hours | 0.16 |
| | 70/30 | 4—5 hours | 0.30 |
| IBOMA/EX. 1 | 95/5 | 2 days | — |
| | 90/10 | 2 days | 1.00 |
| | 80/20 | 1 day | 0.99 |
| TMPTA/EX. 1 | 90/10 | 1 day | 0.22 |

[1]Cure = no methacrylate in nmr spectrum of soluble fraction.
[2]Fraction of material which can be extracted from the filter paper by chloroform post cure.

Example 8

Thin Film Oxidative Polymerizations with Aldehyde of Example 2 — Filter Paper Matrix/1 day/rt/0.1% $Co^{++}$

Using the aldehyde of Example 2 in a system, the following data was observed:

| Sample | Ratio | % Evap. | % Monomer | % Polymer | Nature of Polymer |
|---|---|---|---|---|---|
| IDMA/EX. 2 | 90/10 | 10.5 | 89.5 | 0 | |
| | 80/20 | 6.0 | 54 | 40 | soluble |
| IBOMA/EX. 2 | 90/10 | 20 | 40 | 40 | soluble |
| | 80/20 | 7 | 23 | 70 | soluble |
| IBOA/EX. 2 | 90/10 | 35 | 20 | 45 | soluble |
| | 80/20 | 5.5 | 10 | 85 | soluble |
| HPMA/EX. 2 | 90/10 | 52 | 0 | 48 | soluble |
| | 80/20 | 13 | 0 | 87 | loose gel |
| TEGMA/EX. 2 | 90/10 | +4 | 0 | 104 | gel |
| | 80/20 | +2 | 0 | 102 | gel |
| DCPMA/EX. 2 | 90/10 | +2 | 0 | 102 | gel |
| | 80/20 | +2 | 0 | 102 | gel |
| $C_8A_m$/EX. 2 | 90/10 | 6 | 20 | 74 | soluble |
| | 80/20 | 5 | 0 | 95 | soluble |

Example 9

Cure of Unsaturated Polyester Resin with Aldehyde Oxygen Scavenger

An aldehyde which was of the formula

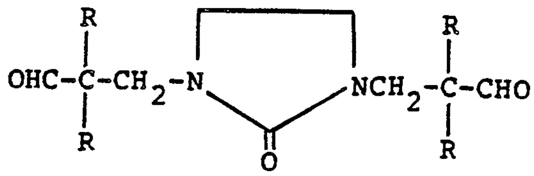

wherein R is a 1/1 mixture of Et and Bu was used in a 1 mil film; 0.1% $Co^{++}$; 2 days; room temperature experiment using a fumaric acid/neopentyl glycol (1/1) unsaturated polyester, and the following data resulted:

| System | Equiv CHO/db | Soluble Fraction in $CHCL_3$ |
|---|---|---|
| Unsaturated Polyester (UPE) | — | 1.01 |
| Aldehyde | — | 1.00 |
| UPE/aldehyde = 9/1 | 0.15 | 0.44 |
| = 8/2 | 0.34 | 0.23 |
| = 7/3 | 0.59 | 0.23 |

Example 10

Monomer Evaluation in Unfilled Castings

The following unfilled castings were prepared at room temperature to determine the effect of the oxygen scavenger aldehyde in Example 2.

| HPMA[1] + | Catalysts[2] | Cure Time (min) | 24 Hr. Surface |
|---|---|---|---|
| IDMA | CHP/Co | NC* | Liquid |
| DPMA | CHP/Co | 360 | Liquid |
| LMA | CHP/Co | NC | Liquid |
| CEMA | CHP/Co | 300 | Liquid |
| IDMA | CHP/Co/Example 2 | 124 | Hard |
| DPMA | CHP/Co/Example 2 | 100 | Hard |
| LMA | CHP/Co/Example 2 | 95 | Hard |
| CEMA | CHP/Co/Example 2 | 70 | Hard |

*NC = No Cure

[1]Equal parts of HPMA and designated monomer

[2]2% Cumene Hydroperoxide; 0.13% $Co^{++}$; 3% Aldehyde

Example 11

Comparison of Aldehyde of Example 9 with Imine of Example 6

This example demonstrates the advantage of the imines as to pot stability:

| | Approx. Cure Times (rt) | |
|---|---|---|
| Sample (+0.1% $Co^{++}$) | Solution | Thin Film |
| Tetraethyleneglycol dimethacrylate | 5—9 days | 9 days |
| Tetraethyleneglycol dimethacrylate/ Example 9 (9/1) | <<1 day | <1 day |
| Tetraethyleneglycol dimethacrylate/ Example 6 (9/1) | 12—14 days | <1 day |
| Dicyclopentenyloxyethyl methacrylate | <1 day | 2—5 days |
| Dicyclopentenyloxyethyl methacrylate/ Example 9 (9/1) | <<1 day | <1 day |
| Dicyclopentenyloxyethyl methacrylate/ Example 6 (9/1) | <1 day | <1 day |
| Unsaturated Polyester Resin[1] | >10 days | >10 days |
| Unsaturated Polyester Resin/ Example 9 (8/2) | <1 day | 1 day |
| Unsaturated Polyester Resin Example 6 (8/2) | >10 days | >10 days[2] |

[1]Unsaturated polyester resin prepared from fumaric acid and neopentyl glycol.

[2]After 3 days at rt, thin film cured well at 3 hours/60°C.

Example 12

Effect of Cobalt Ions and Thiuram on Pot Stability

This example shows the effect tetramethyl thiauram disulfide (TMTDS) as a stabilizer for aldehyde promoted oxidative polymerizations. Twenty parts of the aldehyde of Example 2 was mixed with 80 parts trifunctional acrylate monomer and to this mixture was in turn added selected amounts of $Co^{++}$ an TMTDS with the following results:

| 0.2% $Co^{++}$ | 1000 ppm TMTDS | Pot Stability | Cure Time (thin film) |
|---|---|---|---|
| – | – | 4—20 hours | no cure |
| + | – | <2 hours | 4—20 hours |
| – | + | 1 month | no cure |
| + | + | 6—9 weeks | 20—24 hours |

Example 13

Use of Oxime Stabilizer

This example demonstrates the use of methyl ethyl ketone oxime (Exkin No. 2) in TEGMA/Cymel 303/ Tetraethylene glycol Dimethacrylate/Cobalt (56.2/18.8/20/5/0.06/0/.5 Cycat 600) binder formulation.

| Exkin No. 2 | Viscosity (Brookfield, cps/ICI, poise) | | | |
|---|---|---|---|---|
| (Percent on Binder) | Initial | 3 Days | 5 Days | 10 Days |
| — | 105/1.28 | Gelled | | |
| 0.15 | 105/1.25 | 160/1.42 | 145/1.50 | 170/1.68 |
| 0.30 | 110/1.22 | 160/1.35 | 140/1.42 | 165/1.58 |
| 0.60 | 105/1.22 | 150/1.32 | 135/1.40 | 155/1.50 |
| — | 130/1.42 | Gelled | | |

Example 14

UV Cure of Diacrylate of Bisphenol A Diepoxide Using Aldehyde Oxygen Scavenger

Forty parts diacrylate of Bisphenol A diepoxide (Shell DRH—370 brand), 60 parts DCPOMA, and 2 parts diethoxyacetophenone were exposed to equal levels of UV radiation with the following results:

| Oxygen Scavenger | Film Thickness (Mils) | Result |
|---|---|---|
| — | 1—1.5 | Hard, slight tack |
| 10% EX. 9 | 1—1.5 | Hard, tack free |
| — | <0.5 | Moderate tack |
| 10% EX. 9 | <0.5 | Tack free |

Example 15

Aldehyde Oxygen Scavenger Effect on Surface Cure of Unsaturated Polyester Castings

When 2% of the aldehyde of Example 2, when added to an unsaturated polyester/unsaturated monomer casting resin formulation containing 1% benzoyl peroxide, 0.06% $Co^{++}$, 0.2% dimethyl aniline at polyester/monomer ratios of between 38/62 and 65/35, and using as monomers either dicyclopentenyloxyethyl methacrylate, dicyclopentenyloxyethyl acrylate, or styrene, a had, tack-free surface was obtained versus either a liquid or very tacky surface when the aldehyde was deleted.

Example 16

Use of Oxygen Scavengers in Polymer Concrete

The oxygen scavenger aldehydes of Example 9 and Example 1 were used as levels up to 20% based on polymer concrete formulations containing sand, silica flour, $Fe_3O_4$, $TiO_2$, benzoyl peroxide, catalyst, acrylic resin and acrylic monomer, with excellent results as to improving cure and adhesion characteristics.

| Aldehyde (Ex.) | Level | Pot Life (hrs.) | Cure Speed (hrs.) | Surface Cure (16 hrs.) | Quality Adhesion |
|---|---|---|---|---|---|
| 0 | 0 | 3½ | None | None | None |
| 9 | 2 | 3 | None | None | None |
| 1 | 2 | 3 | None | None | None |
| 9 | 5 | 3½ | 4 | Excellent | Excellent |
| 1 | 5 | 3½ | 4 | Excellent | Excellent |
| 9 | 10 | 2½ | 3 | Excellent | Excellent |
| 1 | 10 | 3 | 3 | Excellent | Excellent |
| 9 | 20 | 2 | 2½ | Excellent | Excellent |
| 1 | 20 | 3 | 3 | Excellent | Excellent |

**Claims**

1. A composition useful as an oxygen scavenger composition for vinyl unsaturated systems, said composition comprising (A) aldehyde or imine of the formula

$$R_3Q_n$$

wherein n is 1—4; $R_3$ is an organic radical having a valence of 1—4 or hydrogen; Q is of the formula

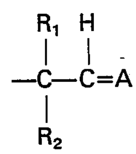

wherein A is O or $NR_4$; $R_1$, $R_2$, and $R_4$ are independently selected $C_{1-6}$ alkyl radicals; and (B) transition metal ion selected from $Co^{++}$, $Cu^{++}$, and $Mn^{++}$.

2. A composition according to claim 1 wherein $R_3$ is

(a) $R_5YCH_2—$

wherein $R_5$ is hydrogen or an organic radical of 1—4 valence and selected from $C_{1-36}$ alkyl, cycloalkyl, aryl, arylalkyl, alkylaryl, and acyl; Y is O or $NR_6$; and $R_6$ is hydrogen or a $C_{1-6}$ alkyl or aryl group; or

(b) 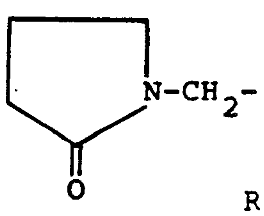 ; or (c) 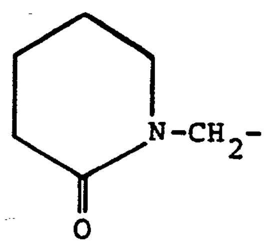 ; or

(d) 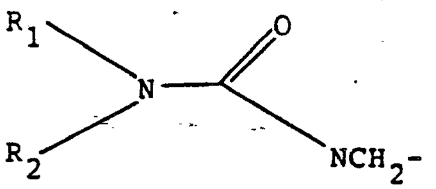 ; or

(e) 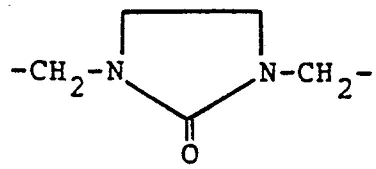 ; or (f) 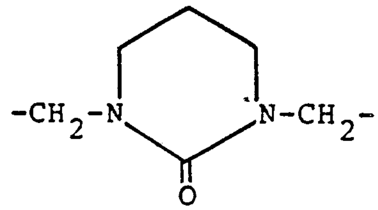 ;

or (g)

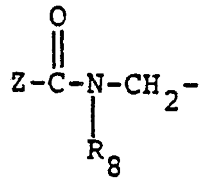

wherein $R_8$ is a $C_{1-6}$ alkyl or aryl, and Z is $NR_8R_8$;

or (h)

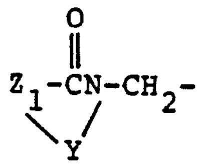

wherein $Z_1$ is $NCH_2$ and Y is $C_{2-5}$ alkyl.

3. A composition according to claim 1 or 2 wherein A is of the formula:

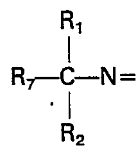

wherein $R_7$ is $C_{1-6}$ alkyl or aryl.

4. A composition according to any preceding claim wherein the aldehyde or imine is selected from

(i) 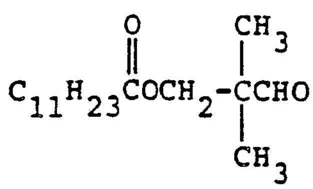 ;

(ii) 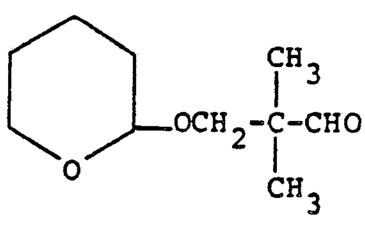 ;

(iii) 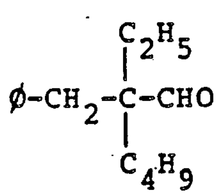 ;

(iv)

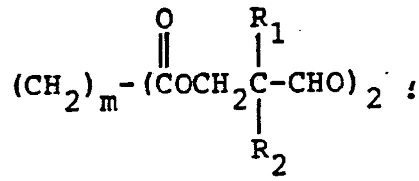

wherein $R_1$ and $R_2$ are selected from methyl, ethyl, butyl, and mixtures thereof, and m is 4 or 7;

(v)

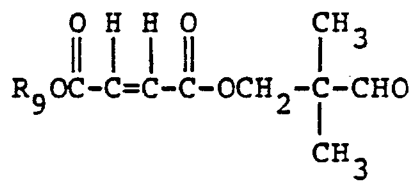

wherein $R_9$ is methyl, ethyl, or butyl;

(vi)

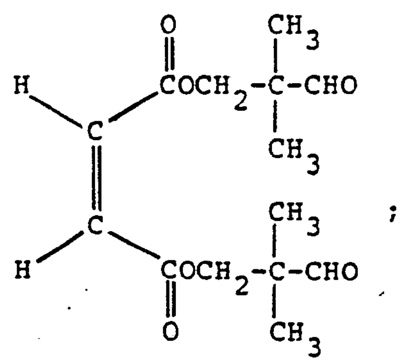

(vii)

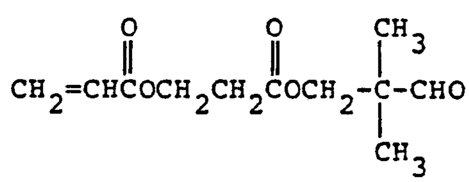

(viii)

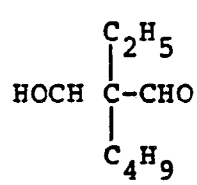

(ix)

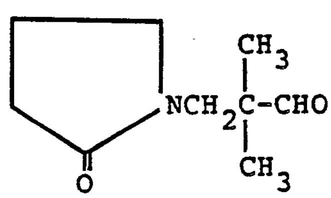

(x)

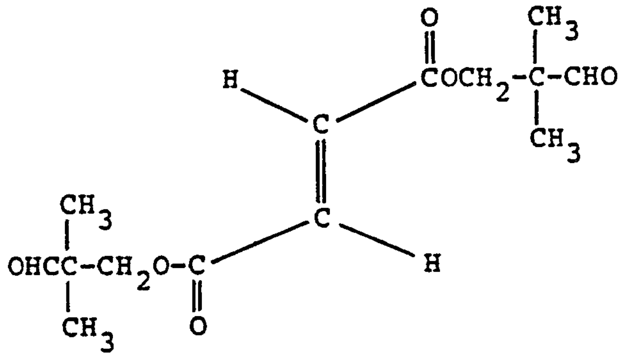

(xi)

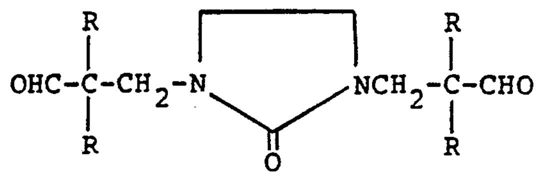

wherein R is methyl, a 1/1 mixture of ethyl and butyl, or a 0.82/0.09/0.09 mixture of methyl, ethyl, and butyl;

(xii)

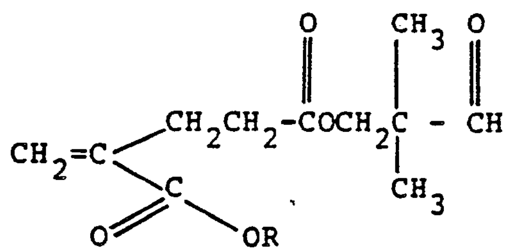

wherein R is methyl or ethyl;

(xiii)

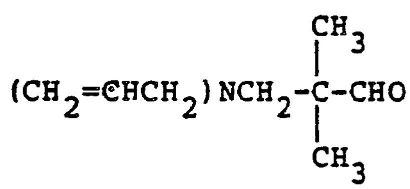 ;

(xiv)

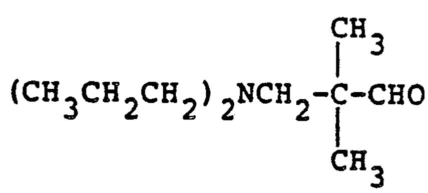 ;

(xv)

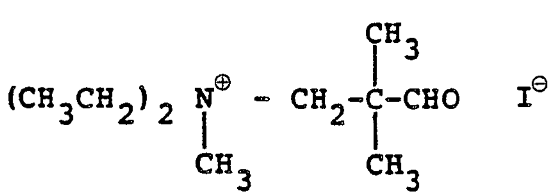 ;

(xvi)

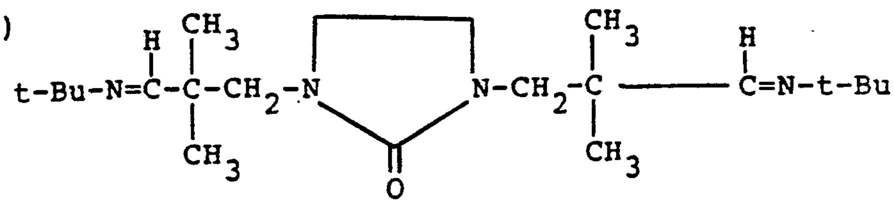

(xvii)

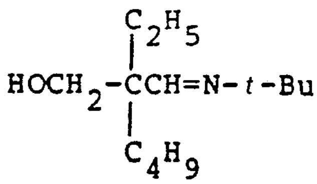

(xviii)

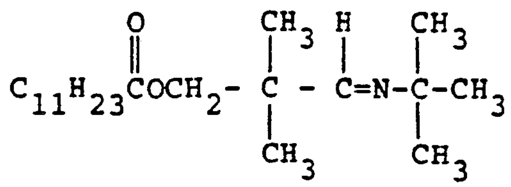

; and

(xix)

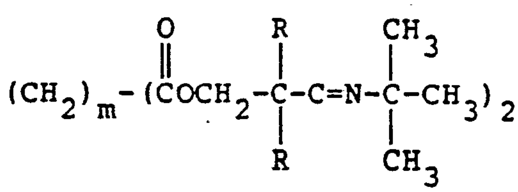

wherein m is 4 and R is methyl, ethyl, or butyl.

5. A composition according to any preceding claim further including an oxime or thiuram stabilizer.

6. The use of at least one aldehyde and/or imine as defined in any preceding claim as an oxygen scavenger in the curing of compositions containing monomer, oligomer and/or polymer having vinyl unsaturation.

7. A mixture comprising an aldehyde and/or imine as defined in any one of claims 1 to 5 and a composition containing monomer, oligomer and/or polymer containing vinyl unsaturation which composition would not readily polymerize under aerobic conditions.

8. A mixture according to claim 7 further containing transition metal ion selected from $Co^{++}$, $Cu^{++}$ and/or $Mn^{++}$.

9. A mixture according to claim 7 or 8 wherein said monomer is selected from the group consisting of

i.) Mono, di- and trifunctional acrylates and methacrylates
ii.) fumarates
iii.) maleates
iv.) vinyl esters
v.) styrenes
vi.) acrylamides
vii.) acrylonitrile
viii.) itaconate esters
ix.) alpha-methylene glutarate esters
x.) acryloxyproprionic acid and esters, and
xi.) methacrylic acid or acrylic acid, and/or

said polymer is selected from the group consisting of:

i.) maleate containing polyesters
ii.) fumarate containing polyesters
iii.) itaconate containing polyesters
iv.) alpha-methylene glutarate containing polyesters
v.) vinyl resins

vi.) urethane multi ((meth)acrylates)
vii.) polyester multi ((meth)acrylates).

10. A mixture according to any of claims 7 to 9 containing 1 to 20 parts by weight aldehyde and/or imine and 99 to 80 parts by weight vinyl unsaturated monomer, oligomer and/or polymer system.

11. The use of a mixture according to any one of Claims 7 to 10 in coating, impregnant, plastic, reinforced plastic, tank lining, gel coating, or polymer concrete.

12. An oxygen scavenging composition comprising a mixture of those aldehydes formed in the reaction of (a) ethylene urea, (b) formaldehyde, (c) isobutyraldehyde, and (d) 2-ethylhexanal in a molar ratio of (a):(b) of 1:2 and of (a) to the sum of (c) and (d) of 1:2.

13. The oxygen scavenging imine which is formed in the reaction of t-butyl amine and the composition of claim 12.

14. The use of the composition of any one of claims 1 to 5 as an oxygen scavenger in the aerobic polymerization of monomer, oligomer and/or polymer having vinyl unsaturation.

**Patentansprüche**

1. Masse, die als Sauerstoffabfängermasse für Vinyl-ungesättigte Systeme geeignet ist, wobei diese Masse aufweist (A) einen Aldehyd oder ein Imin der Formel

$$R_3Q_n$$

worin n 1 bis 4 ist, $R_3$ ein organischer Rest, der eine Wertigkeit von 1 bis 4 oder Wasserstoff ist, Q der Formel

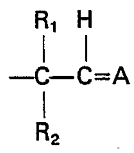

entspricht, worin A O oder $NR_4$ ist, $R_1$, $R_2$ und $R_4$ unabhängig voneinander ausgewählt sind aus $C_{1-6}$-Alkylresten, und (B) ein Übergangsmetallion, ausgewählt aus $Co^{++}$, $Cu^{++}$ und $Mn^{++}$.

2. Masse nach Anspruch 1, worin $R_3$

(a) $R_5YCH_2$—

ist, worin $R_5$ Wasserstoff oder ein organischer Rest mit einer Wertigkeit von 1 bis 4 ist und ausgewählt ist aus $C_{1-36}$-Alkyl, Cycloalkyl, Aryl, Arylalkyl, Alkylaryl oder Acyl, Y O oder $NR_6$ ist und $R_6$ Wasserstoff oder eine $C_{1-6}$-Alkyl- oder Arylgruppe oder

(b) 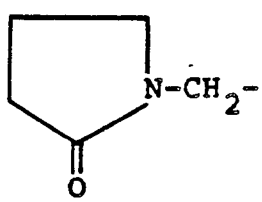 ; oder (c) 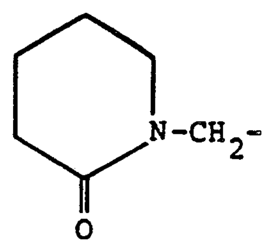 ; oder

(d) 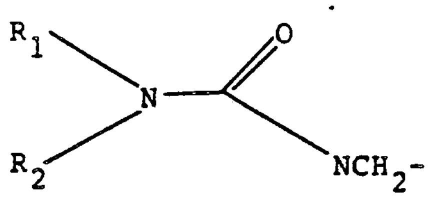 ; oder

(e) 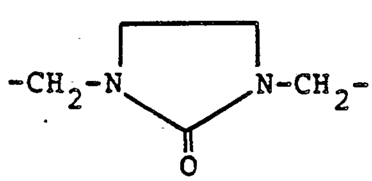 ; oder (f) 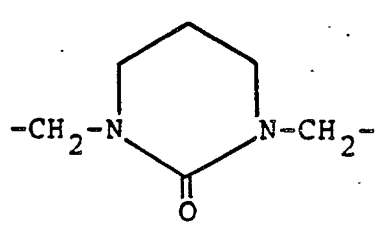 ;

oder (g)

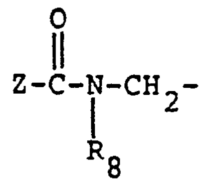

worin $R_8$ $C_{1-6}$-Alkyl oder Aryl ist und Z $NR_8R_8$ ist, oder

(h)

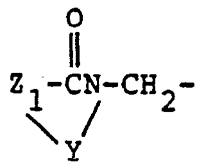

worin $Z_1$ $NCH_2$ ist und Y $C_{2-5}$-Alkyl bedeutet.

3. Masse nach Anspruch 1 oder 2, worin A der Formel

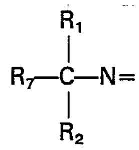

entspricht, worin $R_7$ $C_{1-6}$-Alkyl oder Aryl ist.

4. Masse nach einem der vorhergehenden Ansprüche, worin der Aldehyd oder das Imin ausgewählt ist aus

(i)

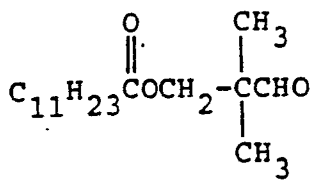

;

(ii)

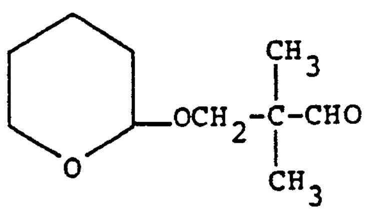

;

(iii)

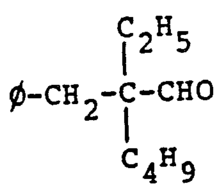

;

(iv)

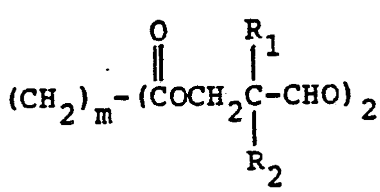

;

worin $R_1$ und $R_2$ ausgewählt sind aus Methyl, Ethyl, Butyl und Mischungen davon, und m 4 oder 7 ist,

(v)

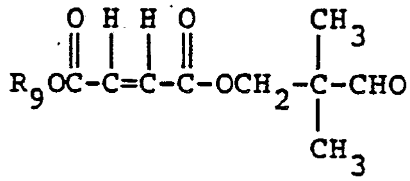

worin $R_9$ Methyl, Ethyl oder Butyl ist

(vi)

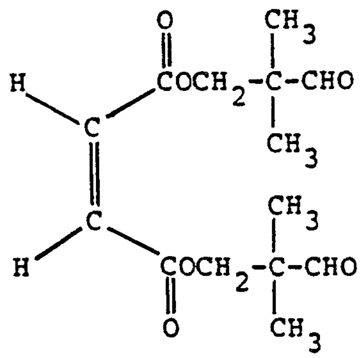 ;

(vii)

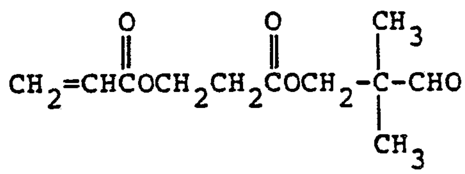

(viii)

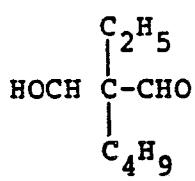

(ix)

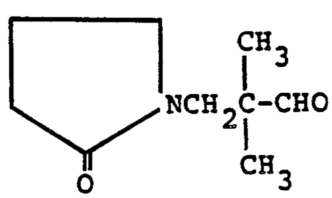

(x)

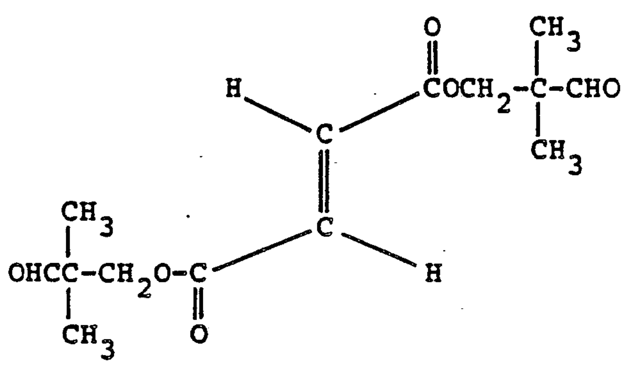

(xi) 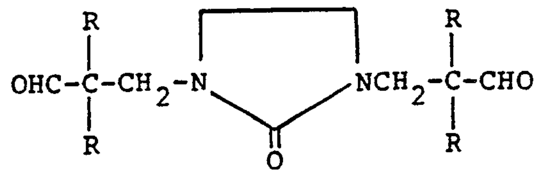

worin R Methyl, eine 1/1-Mischung aus Ethyl und Butyl oder eine 0,82/0,09/0,09-Mischung aus Methyl, Ethyl und Butyl ist,

(xii) 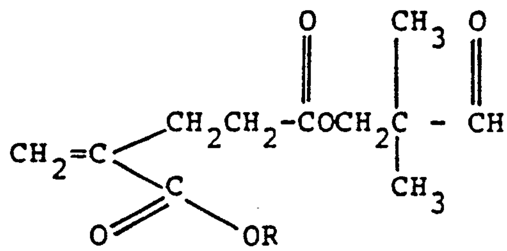

worin R Methyl oder Ethyl ist

(xiii) 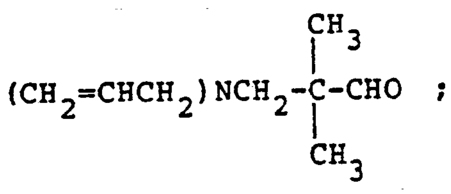

(xiv) 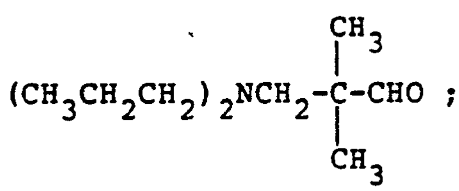

(xv) 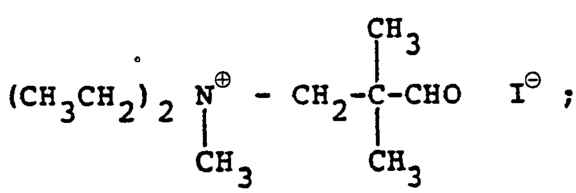

(xvi) 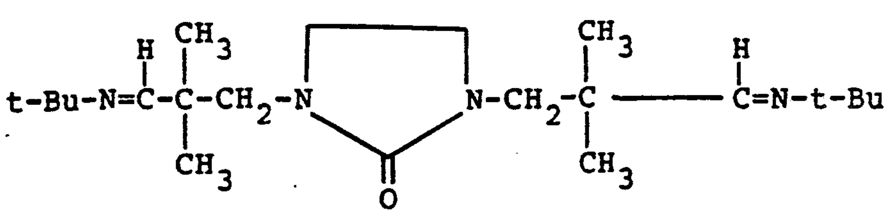

(xvii) 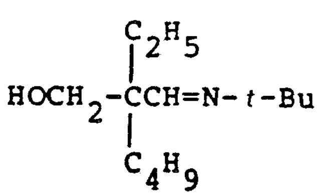

(xviii) 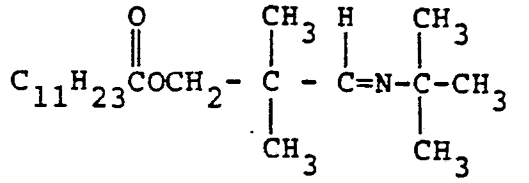 ; und

(xix) 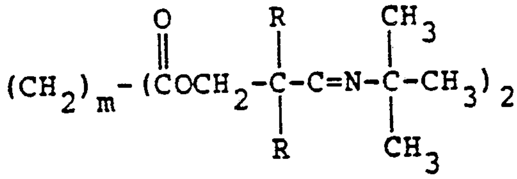

worin m 4 ist und R Methyl, Ethyl oder Butyl ist.

5. Masse nach einem der vorhergehenden Ansprüche, die außerdem ein Oxim oder Thiuramstabilisierungsmittel enthält.

6. Verwendung wenigstens eines Aldehyds und/oder Imins gemäß einem der vorhergehenden Ansprüche als Sauerstoffabfänger zum Härten von Monomeren, Oligomeren und/oder Polymeren mit einer Vinylunsättigung enthaltenden Massen.

7. Mischung aus einem Aldehyd und/oder Imin gemäß einem der Ansprüche 1 bis 5 und einer Masse, enthaltend Monomere, Oligomere und/oder Polymere, die Vinylunsättigung enthalten, wobei diese Masse nicht leicht unter aeroben Bedingungen polymerisiert.

8. Mischung nach Anspruch 7, die außerdem ein Übergangsmetallion enthält, ausgewählt aus $Co^{++}$, $Cu^{++}$ und/oder $Mn^{++}$.

9. Mischung nach Anspruch 7 oder 8, wobei das Monomere ausgewählt ist aus der Gruppe, bestehend aus

i.) Mono-, di- und trifunktionellen Acrylaten und Methacrylaten,
ii.) Fumaraten,
iii.) Maleaten,
iv.) Vinylestern,
v.) Styrolen,
vi.) Acrylamiden,
vii.) Acrylonitril,
viii.) Itaconatestern,
ix.) alpha-Methylenglutaratestern,
x.) Acryloxypropionsäure und Estern, und
xi.) Methacrylsäure oder Acrylsäure und/oder

das besagte Polymere ausgewählt ist aus der Gruppe bestehend aus

i.) Maleat-enthaltenden Polyestern,
ii.) Fumarat-enthaltenden Polyestern,
iii.) Itaconat-enthaltenden Polyestern,
iv.) alpha-Methylenglutarat-enthaltenden Polyestern,
v.) Vinylharzen,
vi.) Urethanmulti((meth)acrylaten),
vii.) Polyestermulti((meth)acrylaten).

10. Mischung gemäß einem der Ansprüche 7 bis 9, enthaltenden 1 bis 20 Gew.-Teile Aldehyd und/oder Imin und 99 bis 80 Gew.-Teile eines Systems aus einem Vinyl-ungesättigtem Monomeren, Oligomeren und/oder Polymeren.

11. Verwendung einer Mischung gemäß einem der Ansprüche 7 bis 10 zum Beschichten, Imprägnieren, in Kunststoffen, in verstärkten Kunststoffen, in Tankauskleidungen, zum Gelbeschichten oder als Polymerzement.

12. Sauerstoffabfangende Masse aus einer Mischung aus denjenigen Aldehyden, die gebildet werden durch die Reaktion von (a) Ethylenharnstoff, (b) Formaldehyd, (c) Isobutyraldehyd und (d) 2-Ethylhexanal in einem Molverhältnis von (a):(b) von 1:2 und von (a) zu der Summe von (c) und (d) von 1:2.

13. Sauerstoffabfangendes Imin, das gebildet wird durch Reaktion von t-Butylamin mit der Masse von Anspruch 12.

14. Verwendung der Masse gemäß einem der Ansprüche 1 bis 5 als Sauerstoffabfänger bei der aeroben Polymerisation von Monomeren, Oligomeren und/oder Polymeren mit Vinylunsättigung.

## Revendications

1. Une composition utile comme composition enlevant l'oxygène pour les systèmes à insaturation vinylique, ladite composition comprenant (A) un aldéhyde ou une imine de formule

$$R_3Q_n$$

dans laquelle n vaut de 1 à 4; $R_3$ est un radical organique ayant une valence de 1 à 4 ou un hydrogène; Q répond à la formule

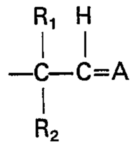

dans laquelle A est O ou $NR_4$; $R_1$, $R_2$ et $R_4$ sont indépendamment choisis parmi des radicaux alcoyles en $C_{1-6}$; et (B) un ion de métal de transition choisi parmi $Co^{++}$, $Cu^{++}$ et $Mn^{++}$.

2. Une composition selon la revendication 1, dans laquelle $R_3$ est

(a) $R_5YCH_2—$

où $R_5$ est un hydrogène ou un radical organique ayant une valence de 1 à 4 et choisi parmi un alcoyle en $C_{1-36}$, un cycloalcoyle, un aryle, un arylalcoyle, un alcoylaryle et un acyle; Y est O ou $NR_6$; et $R_6$ est un hydrogène ou un groupe alcoyle en $C_{1-6}$ ou aryle; ou

(b) 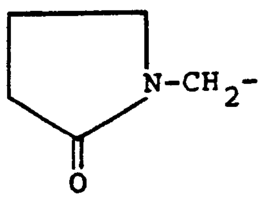 ; ou (c) 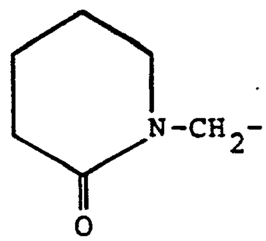 ; ou

(d) 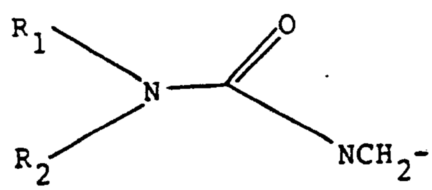 ; ou

(e) 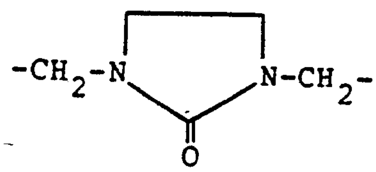 ; ou (f) 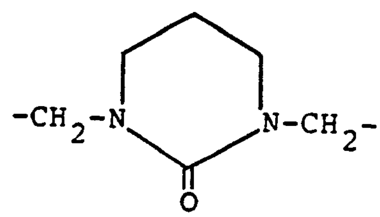 ;

ou

(g) 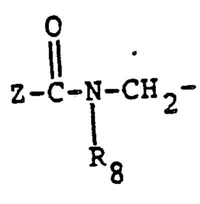

où $R_8$ est un alcoyle en $C_{1-6}$ ou un aryle, et Z est $NR_8R_8$; ou (h)

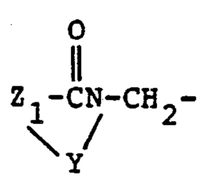

où $Z_1$ est $NCH_2$ et Y est un alcoyle en $C_{2-5}$.

3. Une composition selon la revendication 1 ou 2, dans laquelle A répond à la formule:

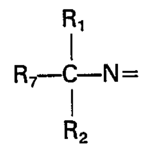

dans laquelle $R_7$ est un alcoyle en $C_{1-6}$ ou un aryle.

4. Une composition selon l'une quelconque des revendications précédentes, dans laquelle l'aldéhyde ou l'imine est choisi parmi

(i) 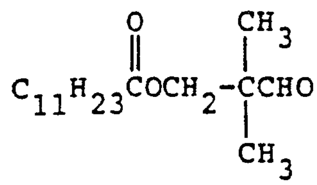 ;

(ii) 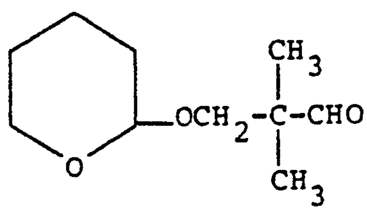 ;

(iii) 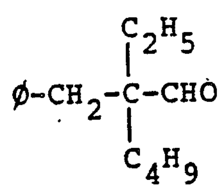 ;

(iv) 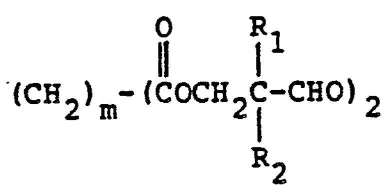 ;

où $R_1$ et $R_2$ sont choisis parmi un méthyle, un éthyle, un butyle et leurs mélanges et m vaut 4 ou 7;

(v) 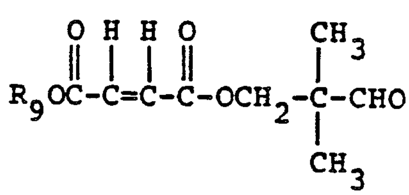

où $R_9$ est un méthyle, un éthyle ou un butyle;

(vi)

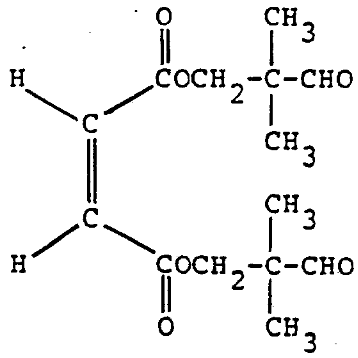

;

(vii)

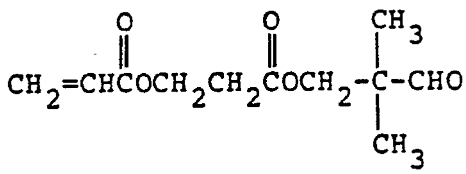

(viii)

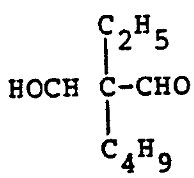

(ix)

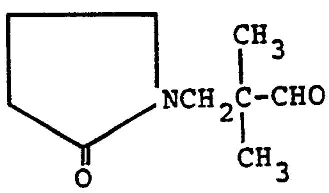

(x)

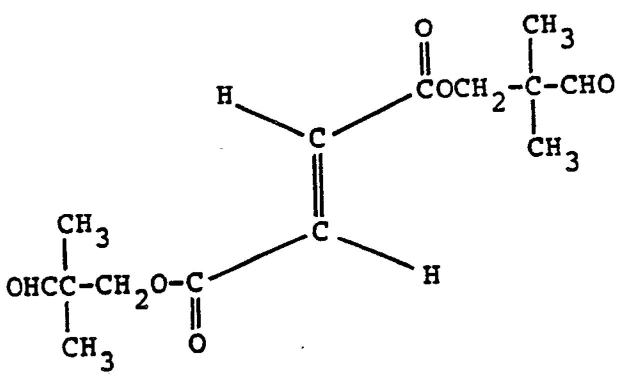

(xi)

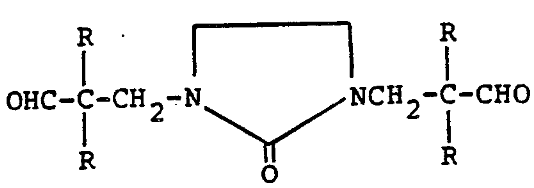

où R est un méthyle, un mélange 1/1 d'éthyle et de butyle ou un mélange 0,82/0,09/0,09 de méthyle, d'éthyle et de butyle;

(xii)

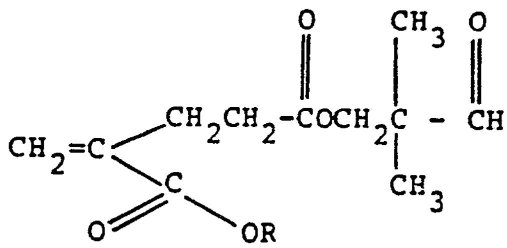

où R est un méthyle ou un éthyle;

(xiii)

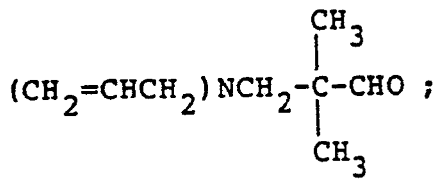

(xiv)

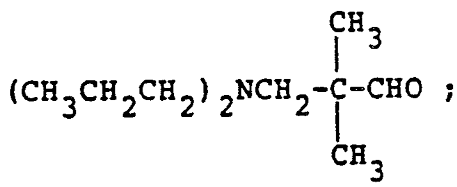

(xv)

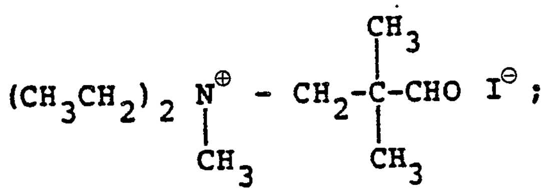

(xvi)

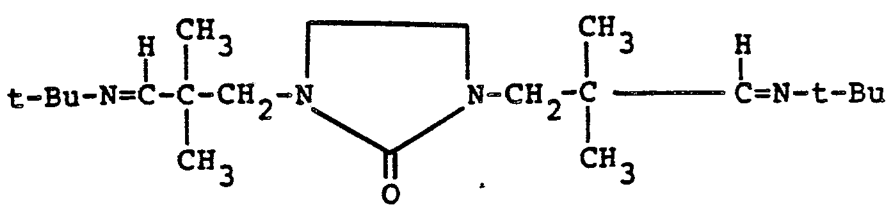

(xvii)

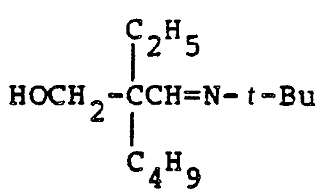

(xviii)

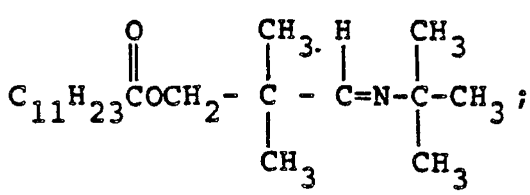 et

(xix) 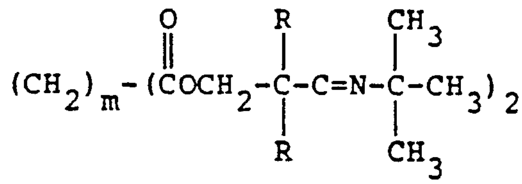

où m vaut 4 et R est un méthyle, un éthyle ou un butyle.

5. Une composition selon l'une quelconque des revendications précédentes comprenant de plus une oxime ou un thiurame stabilisants.

6. Utilisation d'au moins un aldéhyde et/ou une imine comme défini dans l'une quelconque des revendications précédentes comme agent enlevant l'oxygène dans le durcissement de compositions contenant un monomère, un oligomère et/ou un polymère ayant une insaturation vinylique.

7. Un mélange comprenant un aldéhyde et/ou une imine comme défini dans l'une quelconque des revendications 1 à 5 et une composition contenant un monomère, un oligomère et/ou un polymère ayant une insaturation vinylique, laquelle composition ne se polymériserait pas facilement en conditions aérobies.

8. Un mélange selon la revendication 7 contenant de plus un ion de métal de transition choisi parmi $Co^{++}$, $Cu^{++}$ et/ou $Mn^{++}$.

9. Un mélange selon la revendication 7 ou 8, dans lequel ledit monomère est choisi dans le groupe constitué de

- i) les acrylates et méthacrylates mono, di et trifonctionnels
- ii) les fumarates
- iii) les maléates
- iv) les esters vinyliques
- v) les styrènes
- vi) les acrylamides
- vii) l'acrylonitrile
- viii) les esters itaconiques
- ix) les esters α-méthylèneglutariques
- x) l'acide acryloxypropionique et ses esters, et
- xi) l'acide méthacrylique ou l'acide acrylique, et/ou

ledit polymère est choisi dans le groupe constitué de:

- i) les polyesters contenant un maléate
- ii) les polyesters contenant un fumarate
- iii) les polyesters contenant un itaconate
- iv) les esters contenant un α-méthylèneglutarate
- v) les résines vinyliques
- vi) les uréthanne multi((méth)acrylates)
- vii) les polyester multi((méth)acrylates).

10. Un mélange selon l'une quelconque des revendications 7 à 8 contenant 1 à 20 parties en poids d'aldéhyde et/ou d'imine et 99 à 80 parties en poids d'un système de monomère, d'oligomère et/ou de polymère à insaturation vinylique.

11. L'utilisation d'un mélange selon l'une quelconque des revendications 7 à 10 dans un revêtement, un imprégnant, un plastique, un plastique renforcé, un revêtement du cuve, un enduit gélifié ou un béton de résine.

12. Une composition enlevant l'oxygène comprenant un mélange des aldéhydes formés dans la réaction de (a) l'éthylène-urée, (b) le formaldéhyde, (c) l'isobutyraldéhyde et (d) le 2-éthylhexanal dans un rapport molaire de (a)/(b) de 1/2 et de (a) à la somme de (c) et (d) de 1/2.

13. L'imine enlevant l'oxygène qui est formée dans la réaction de la tert-butylamine et de la composition de la revendication 12.

14. L'utilisation de la composition de l'une quelconque des revendications 1 à 5 pour enlever l'oxygène dans la polymérisation aérobie d'un monomère, oligomère et/ou polymère ayant une insaturation vinylique.